(19) Europäisches Patentamt / European Patent Office / Office européen des brevets

(11) **EP 3 896 628 A1**

(12) **EUROPEAN PATENT APPLICATION**

(43) Date of publication:
**20.10.2021 Bulletin 2021/42**

(51) Int Cl.:
**G06Q 10/06** (2012.01)　　　**G06Q 50/30** (2012.01)

(21) Application number: **21168355.2**

(22) Date of filing: **14.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2020　US 202063010702 P**

(71) Applicant: **Pick a Pier LTD**
**Tel Aviv (IL)**

(72) Inventors:
• **AVERBUCH, Dana**
**Givatayim (IL)**
• **ANTWARG, Liat**
**Gani Tikva (IL)**
• **COHEN, Asaf**
**Moshav Beit Halevi (IL)**
• **COHEN, Idan**
**Tel Aviv (IL)**
• **MALKA, Dvir**
**Mevaseret Zion (IL)**
• **FOMIN, Raz**
**Herzliya (IL)**

(74) Representative: **Betten & Resch**
**Patent- und Rechtsanwälte PartGmbB**
**Maximiliansplatz 14**
**80333 München (DE)**

(54) **A METHOD OF TRACKING AND MATCHING RESERVATIONS, OF MARINE DOCKING BERTHS AT PORTS, FOR MAXIMIZATION OF BUSINESS GOALS**

(57)　　A computerized method, and system, for tracking and matching reservations, of marine docking berths at ports, comprising:
• receiving as input, a request for a reservation, comprising docking requirement specifics for a vessel, a port of interest, dates of interest, and vessel size;
• maintaining a database with berth data specifics of a plurality of berths at a port; the availability status, and the physical characteristics of the berths;
• searching the database to identify an initial match between the request for a reservation, and between the berths;
• optimizing the initial match using an optimizer function, to detect whether an alternative match is more optimal according to predetermined port business preferences; and if found: swapping the initial match with the alternative match; and outputting a reservation for booking to a user.

**Fig. 1　Prior Art**

EP 3 896 628 A1

**Description**

**FIELD OF THE INVENTION**

The invention generally relates to reservation booking, and more particularly relates to booking marine docking berths for marine vessels, at marinas and ports.

**BACKGROUND**

When planning an ocean voyage, it is recommended to prebook a docking berth at the destination port, to ensure docking is available, especially at the height of marine travel season.

A typical pier will have variously sized berths, that can accommodate variously sized incoming vessels. A pier manager must guarantee that incoming boats are directed towards appropriately sized available berths. Docking berth specifics that must be considered, are the vessel size, including the draft size which indicates the depth of the vessel. Failure to properly match these specifics can result in a boat running aground or being damaged by pier walls or by surrounding vessels. In contrast, directing a small vessel to an overly large berth represents a loss of revenue for the pier and inefficient space usage (as a larger berth reservation is typically more costly than a smaller berth).

Additional specifics that determine whether an incoming vessel can be accommodated for docking, include the preferred dates, length of stay, a request for hook-up to utilities such as electric and water/sewage, and may include user preferences such as preferred distance to a city or to attractions, cost, availability of refuelling, etc.

Prior art methods for ordering a docking berth, and for tracking availability of berths at a port, are inflexible, outdated technologically, and vary at each port. Some ports still rely on paper pier maps, pockmarked with thumbtacks indicating the presence of vessels in port. This results in lack of managing oversight and lends itself to human error, which may be financially disastrous to the pier.

Bookings are typically conducted over the phone, or at best over email, and are manually assessed and approved by a pier manager, based on limited knowledge of future availability. The lack of connectivity and computerized oversight results in lost marketing opportunities and slow customer growth.

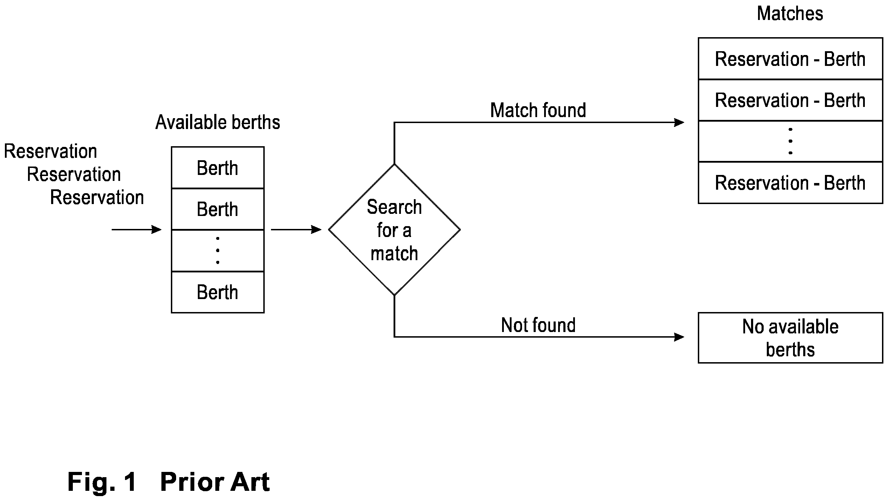

Referring now to Prior Art Figure 1, typically, when a user contacts a port to request a berth, a hasty check is made of available berths, and if no suitable berth is found, the request is declined, with no real waiting list and no follow-up available, even if cancelations occur. This represents loss of revenue for the port and results in unsatisfied customers. It would be desirable to provide an automated booking solution, having a detailed waitlist that includes specifics of vessels waiting to be matched to suitable berths, which may be followed up by port personnel.

Booking processes vary greatly between marinas, with some relying on personal relationships, some on same-day availability and others enabling future booking via email.

Boaters and marinas must comply with local and national regulation. Marinas lack tools to verify the information of arriving vessels and must rely on questionable information provided by docking vessels.

The need exists for a central global digital solution that supports the complexity of the marina market and is able to aggregate data.

It is an object of the present invention to provide an automated solution for ordering and managing docking berths. The invention upgrades docking berth management to modern capabilities known in other parallel industries, and provides new capabilities not known in parallel industries and not previously known in the art. Depending on a port's business goals, the invention can be set to increase port profitability, to maximize the port's space utilization, reduce uncertainty for ports and for their customers, and maximize the customer satisfaction by meeting their maximal requirements.

**SUMMARY OF THE INVENTION**

In a general overview of the invention, the present invention provides an algorithmic method of ordering and matching orders, for marine berths at a port.

The invention allows end users to electronically order a suitable docking berth at a port. The invention utilizes a proprietary user interface to allow user communication with at least one server, configured to receive user requests for berths. The server is configured to compare the specifics of each berth requested, with the specifics of available berths, and to match berths accordingly.

In a presently preferred embodiment, an initial search is made to match the requested port and requested dates of arrival, with an available berth. Once this match is successful and meets predefined requirement thresholds, the novel optimization algorithm of the invention will be activated to ensure the match is optimal according to the business goals set by each port (e.g., maximal occupancy, maximal profit, best fit vessel to berth, etc).

The software allows port officials to track availability of docking berths, grow their berth inventory gradually, while automatically providing berths suited to each reservation.

The software of the invention receives as input, the docking requirements of a vessel that is expected to arrive and matches this input to the pool of berths available at ports of interest. Non-limiting examples of docking requirements are: vessel size (including depth requirements), hook-up to utilities such as electric and water/sewage, length of stay, preferred dates, user preferences such as preferred distance to a city or to attractions, cost, availability of refuelling, willingness to switch berth mid-stay, etc.

One of the many advantages of the invention is a "swap match" capability, which rechecks whether berth matches for incoming vessels are indeed most optimal according to a port's best business preferences (such as maximal revenue).

The check swap optimizer is triggered when the status of a berth is changed to "available" in the port's inventory database. The check swap optimizer is also triggered when a new match is created for a new reservation. The optimizer ensures that the latest data on berth availability is used, and matches may be swapped between vessels and berths, so that fewer berths are left unoccupied, and smaller vessels are directed to the best sized berth, leaving larger berths available for larger vessels.

The matching algorithm is configurable, allowing port authorities to set specific business goals, and constraints which in turn are translated to different weights for every element constructing the mathematical optimization function. This allows customization to the needs of each port.

The invention provides another novel capability, in allowing owners or renters of berths to report their berths as being empty and available for leasing ("absence report"), thus increasing berth supply in busy ports. Berth owners may be paid a percentage of the profit or offered a discount while anchoring in another participating port.

The invention may be utilized for tracking reservations of pleasure vessels as well as for commercial marine vessels.

These and other advantages of the invention are described further in the Detailed Description of the invention hereinbelow.

Glossary

In the present invention, the term "request for reservation", refers to an electronic communication, sent by a user interested in docking a marine vessel at a port of interest. The user will be required to provide details of the docking requirement specifics for the specific arriving vessel; these include: a port of interest, calendar dates of interest, and the vessel size.

The term "vessel size" refers to at least the following vessel measurements: length, beam and draft (which indicates the depth of the vessel).

The terms "docking requirement specifics" is used interchangeably with the terms "docking specifics", "docking requirements" and "vessel requirements" to refer to the details provided by an end user interested in reserving a berth. These docking specifics are necessary to ensure docking suitability for a specific vessel and its upcoming arrival particulars. Non-limiting examples of docking specifics include: the vessel arrival dates, vessel size (including depth requirements), hook-up to utilities such as electric and water/sewage, length of stay, identity of booking party.

In the present invention, the terms "berth data specifics" and "berth specifics" refer to the physical characteristics of berths available for docking at a specific port. Non-limiting examples of berth data specifics for each berth, which are saved in a suitable database, comprises details such as the berth size (length, width, and estimated water depth), vessel docking vertically/horizontally, port name and location, pier identity and location, berth identity and location, location of utility hook-ups, and the direction of docking.

The term "availability" or "availability status" of a berth, refer to the vacancy status of a berth, and whether it may be used for docking during specific calendar dates. Non-limiting examples of availability status include: vacant, booked, occupied, unavailable, available.

In the present invention, the term "match" refers to an outputted match, identified by the invention, in which the docking requirements of a particular vessel, have been successfully matched with the physical characteristics of an available berth.

The term "initial match" refers to a match identified by the algorithm, between a request for a reservation, and between berth data specifics, of available berths saved in a berth database. The match must meet predetermined requirement thresholds, above which it is considered acceptable.

In the present invention, the terms "match swap check" and "swap match function" and "swap match capability" are used interchangeably, to refer to a repeat check of berth matches made, to recheck whether berth matches for incoming vessels, are indeed optimal according to the port's business preferences. As berthing reservations are typically made several days and occasionally several weeks in advance of arrival, cancelations, delays or changes may occur, opening up additional berths for booking. The "swap match" procedure is performed on a regular basis, to ensure the maximization of each port business preferences, such as maximum occupancy, maximum revenue, meeting maximal boaters needs, etc.

The term "optimizer function" refers to the algorithmic calculation used to rank matches identified using the latest available data, and determining whether "alternative matches" are found that are more optimal according to predetermined port business preferences, than any initial matches made.

The term "predetermined port business preferences" refers to matching practices predefined for each port, related to the port business preferences. While one port may prefer to maximize the profit margin, another port may prefer prestigious incoming vessels. Therefore business preferences may differ for each port, and the relative weights of these requirements may be adjusted according to their importance. Non-limiting examples of preferences are: "maximize match of berth days"; "minimum excess size berth per vessel", "maximum excess size vessel per berth", "maximize match of berth days", etc.

## BRIEF DESCRIPTION OF THE DRAWINGS

The present invention is illustrated by way of example in the figures of the accompanying drawings, in which like references indicate similar elements and in which:

Fig. 1 is a flowchart illustrating Prior Art common practice in reservation handling.

Fig. 2 is a high-level flowchart is shown, indicating flow of berthing information at a specific port, according to the invention.

Fig. 3 illustrates pictorially the "check match swap" function as it relates to two different vessels requesting overlapping reservation dates, and possible berth matches.

Fig. 4 illustrates an example of the "check match swap" function as it relates to two different sized vessels and possible berth matches.

Fig. 5 depicts a screenshot illustrating the docking requirements of a specific vessel requesting a reservation.

Fig. 6 depicts a screenshot of checkout for a pending reservation.

Fig. 7 depicts a screenshot of a popup for a port manager, asking him to indicate the reason he selected an alternative berth match over the highest ranked match.

Fig. 8 shows a port manager reservation master screen, illustrating various reservations pending and booked.

Fig. 9, illustrates an "absence report" screen, in which owners or renters of berths may report their berths as being empty and available for leasing.

Fig. 10 depicts a screenshot for requesting a reservation at a specific port of interest.

## DETAILED DESCRIPTION OF THE INVENTION

In the following detailed description, numerous specific details are set forth in order to provide a thorough understanding of the present invention. There is no intention to limit the invention to the details of construction and the arrangement of the components set forth in the following description or illustrated in the drawings. The invention is capable of other embodiments or of being practiced or carried out in various ways. Also, it is to be understood that the phraseology and terminology employed herein are for the purpose of description and should not be regarded as limiting.

In a general overview of the invention, the present invention provides an algorithmic method of tracking and managing orders, for marine berths at a port.

The invention allows end users to electronically order a suitable docking berth at a port. The invention utilizes a proprietary user interface to allow user communication with at least one server, configured to receive user requests for reservations for berths.

The server is configured to compare the specifics of each berth requested, with the specifics of available berths, and to match berths accordingly, in order to find an "initial match". The software allows port officials to track availability of docking berths and provide berths suited to each vessel requirements.

The software of the invention receives as input, the specifics of docking requirements of vessels that are expected to arrive and matches this input to the specifics of berths available.

Docking requirement specifics may include: vessel size (including depth requirements), hook-up to utilities such as electric and water/sewage, length of stay, preferred dates, user preferences such as preferred distance to a city or to attractions, cost, availability of refuelling, willingness to switch berth mid-stay, etc.

The software then outputs several possible matches, and displays them as "initial docking berth matches", which need to be approved and booked. The match may be complete or partial (e.g., one option may include the need to switch docking mid-stay or may be farther from a city than preferred, dates may be similar but not identical to requested dates), and thus the user may approve or reject a match.

Berthing matches found by the software may be sent to port authorities for their approval, and then be sent to the booking user; this is termed the "semi-automatic" mode of the invention. Alternatively, berthing matches may be sent directly to the requesting end-user, in the "automatic" mode of the invention; the mode is set according to port preferences.

One of the many advantages of the invention is a "swap match" optimizing capability, which rechecks whether berth matches for incoming vessels are indeed most optimal according to a port's best business preferences (such as maximal revenue). If one or more optimal matches are detected, they are outputted as "alternative matches", which are saved once they are approved and booked.

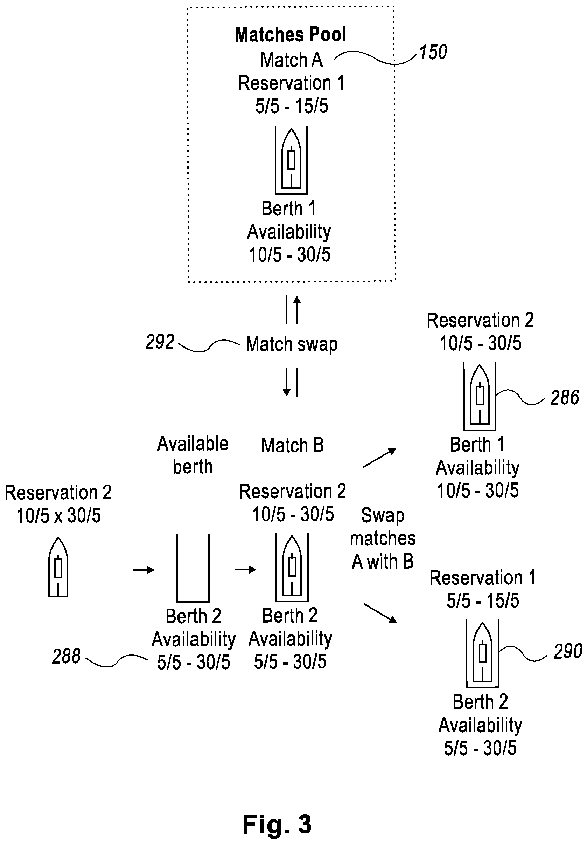

The "check swap optimizer" is triggered when the status of a berth is changed to "available" in the port's inventory database. The check swap optimizer is also triggered when a new match is created for a new reservation. The optimizer ensures that the latest data on berth availability is used, and matches may be swapped between vessels and berths, so that fewer berths are left unoccupied, and smaller vessels are directed to the best sized berth, leaving larger berths available for larger vessels. This ensures that the latest data on berth availability is used to determine the berth match; and that business preferences are met, such as leaving fewer berths unoccupied, or directing vessels to the best sized berth. Further details of the "swap match" function are described below in relation to Figs. 3-4.

The matching software is configurable, allowing port authorities to introduce unique business preferences, and allowing port authorities to set the weight given to each preference related to the match. This maximizes revenue, according to the best business preferences of each port. This subject is enlarged upon hereinbelow.

The invention provides another novel capability, in allowing owners or renters of berths to report their berths as being empty and available for leasing ("absence report"), thus increasing berth supply in busy ports. As an incentive, berth owners may be paid a percentage of the berth profit or may be offered a discount while anchoring in another participating port.

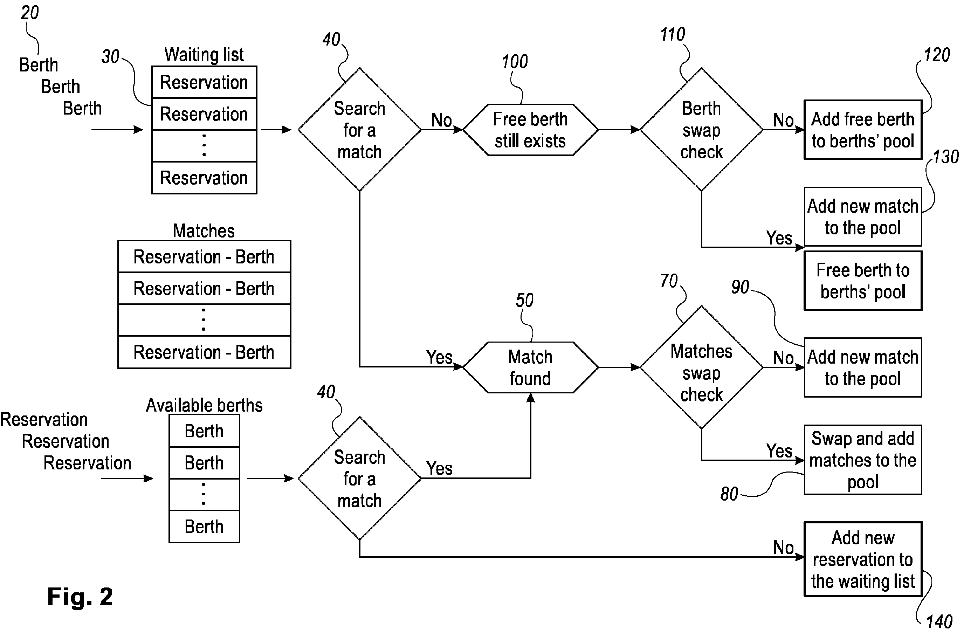

Referring now to Fig. 2, a high-level flowchart is shown, indicating flow of berthing information at a specific port.

Data related to all berths 20 located at a specific port, is saved and updated continuously in a suitable database. These berths represent the supply pool for berths available for docking. The database includes berth data specifics for each berth, comprising details such as the berth size (length, width, and estimated water depth), vessel docking vertically/horizontally, minimal docking length, port name and location, pier identity and location, berth identity and location, location of utility hook-ups, direction of docking, etc.

When an electronic inquiry is made for a berth request at the port of interest ("request for reservation") the software initially determines if an initial match may be made between the specifics of the vessel including requested calendar dates, and between the specifics of available berths ("search for a match" 40).

If a berthing match is found 50, it is saved as an "initial match" in the matches pool, in the database, and a reply is sent to the inquirer, that a berth is available. Once the user proceeds to payment, his reservation is made, and his booking is guaranteed.

If no match is made, the reservation request is placed 140 in a waitlist 30 for a predefined period.

In a presently preferred embodiment, possible matches for the requested reservation are initially detected, based on five central parameters of the docking requirements: dates requested, specific port, and the vessel size measurements: length, beam and draft. These parameters are compared to the berth data specifics of available berths.

Additional matching parameters with different weights are used in the mathematical optimization function, based on each port's requirements or preferences and will be discussed below.

Any of the parameters may be weighted according to the business goal preference of the specific port. When enough matching events are collected for a certain port (or similar ports) the described parameters can be learned using machine learning techniques.

A match is considered to have been found, when the specifics of the match meet predefined matching requirement thresholds. The contribution of the match to the optimization function is measurable mathematically, and the match percentage is typically displayed for approval of the port authority at the match approval stage for.

One of the many advantages of the invention is the "match swap check" 70 function. Bookings are typically made several days to weeks in advance. Cancellations or delays may occur, or more berths may become available when vessels depart unexpectedly. When this occurs, the optimizing algorithm is triggered to check if the matches previously made for upcoming bookings are still optimal according to the port business preferences. If necessary, a new "alternative match" will be made that swaps the original matches, and better optimizes the port's business goals. The alternative match/es are added 80 to the database. If the initial match is determined to be most optimal, it is saved as a new match 90 in the database.

Referring to Fig. 3, an example is shown of the "check match swap" function as it relates to two different vessels requesting overlapping reservation dates, and possible berth matches.

At the top of Fig. 3, dotted box, Reservation1 has requested a berth for 10 days during 5-15th of May and been initially matched in Match A 150, with Berth1, which is available during this period. Berth1 still remains open for additional days during 16-30th of May. The vessel owner has received a rapid (same day) response approving his upcoming arrival, ensuring customer satisfaction.

Vessel Reservation2 then requests to berth for the exact period of availability of Berth1, namely 10-30th of May. During a "check match swap" run 292, the algorithm of the invention detects 286 that Berth1 would be a better date match for vessel Reservation2 than for vessel Reservation1, as it leaves no non-booked days. The invention reallocates 286 Berth1 to vessel Reservation2 and Berth2, which is available for dates May 5-30, to vessel Reservation1 290.

The remaining open dates that fall after departure of vessel Reservation1 from Berth2 on May 15th, namely May 16-30, may still be matched and booked for other vessels that arrive in a timely manner. Berth2 is thus returned to the pool of available berths for dates May 16-30.

Notification of final berth locations is sent to vessels Reservation1, Reservation2 at a predetermined time prior to their arrival.

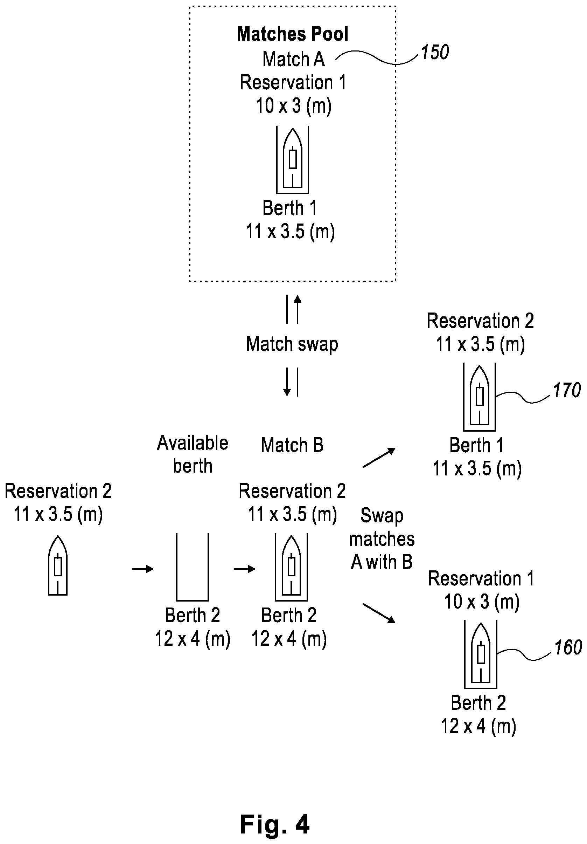

Referring to Fig. 4, an example is shown of the "check match swap" function as it relates to two different sized vessels and possible berth matches.

In the Example shown, the small vessel Reservation1 was initially matched with a medium sized Berth1, ("Match A" 150) as this was the only available berth at the time. The match was initially made at a lower profit margin, to ensure maximum occupancy of all berths, while the vessel owner would be billed the low cost of a small berth (even though the berth could accommodate a larger vessel).

Then, before the expected arrival date, a medium sized vessel Reservation2 requested to berth.

The "check match swap" 70 procedure identified a Newly available Berth2 (sized 12x14), which could theoretically be matched to Reservation2 (match B).

However, counter-intuitively, the optimizer of the invention determined it would be more beneficial for the port to match the newly available Berth2 to the small vessel Reservation1, as the small vessel would be docking for only a short stay and the larger Berth2 would be able to accommodate a broader range of upcoming vessels than Berth1 could have. The small vessel Reservation1 will then be directed to the newly available Berth2 (alternative match 160) instead of to the original match.

Both of the new matches 160 and 170 are saved in the database as "booked", and final docking berth specifics are sent to the vessel owners Reservation1, Reservation2, prior to arrival.

In a presently preferred embodiment, the following instances trigger the optimizer function of the algorithm to detect whether alternative matches should be made ("check swap match"):

1. Every time a new reservation is created in the system.
2. Every time a new berth is added to the database as inventory; the berth available dates are added as well.
3. Every time the availability of a berth is changed (dates are changed, the berth is removed completely from the inventory, etc.).
4. Every time a booked reservation is changed.

In a presently preferred embodiment, the matching algorithm of the invention tries to optimize a low "cost function" to estimate the suitability of specific berths for specific vessels inquiring about berths, using the following calculations. Each of the mathematical factors that influence the matching algorithms below, may be weighted according to the preferences of the specific port. In one embodiment, mathematical factors that influence the matching algorithms below are learned by machine learning algorithms once a significant amount of data is collected for a specific port (or for similar ports).

1. A space matching estimation, factors in the duration of the stay, the price for the berth, and the prestige factor of the vessel. Each of these factors might differ in meaning and scale, for different ports, and can be set for each port (or learned from a port's previous matches):

$$\text{cost\_while\_anchoring} = ((\text{length\_diff} * \text{length\_factor} + \text{beam\_diff} * \text{beam\_factor} + \text{draft\_diff} * \text{draft\_factor}) * \text{duration} * \text{duration\_factor}) / (\text{price} * \text{prestige})$$

The term "Duration" refers to the number of days of overlap between an available berth and the dates of the requested reservation.

2. A space waste estimation for the days before the reservation which are left unoccupied. The estimation factors in the size of the berth as well as the number of days the berth is left unoccupied. The size of the berth typically impacts the price of each berthing day, and therefore should be considered when searching for the match most profitable for the port.

$$\text{wasted\_space\_before\_reservation} = (\text{length\_berth}*\text{length\_factor} +$$
$$\text{beam\_berth}*\text{beam\_factor} + \text{draft\_berth}*\text{draft\_factor}) * \text{diff\_days\_before\_res} *$$
$$\text{ddbr\_factor}$$

The term "diff_days_before_res" refers to the number of unoccupied days of the berth before the "start reservation" date.

The term "diff_days_after_res" refers to the number of unoccupied days of the berth after the "end reservation" date. There is typically a higher chance to utilize days after the end of the reservation, by matching late arriving vessels, therefore the weight may be adjusted to give the "unoccupied days after" a lower penalty than "unoccupied days before".

The term "ddbr_factor" refers to a penalty factor if the berth remains unoccupied before the "start reservation" date.

$$\text{wasted\_space\_after\_reservation} = (\text{length\_berth}*\text{length\_factor} +$$
$$\text{beam\_berth}*\text{beam\_factor} + \text{draft\_berth}*\text{draft\_factor}) * \text{diff\_days\_after\_res} *$$
$$\text{ddar\_factor}$$

The term "ddar_factor" refers to a penalty if the berth remains unoccupied after the "reservation end" date.

The term "price" refers to the cost per night for berthing a certain vessel in a certain berth, at a certain time.

3. A total cost estimation, which utilizes as input, the matching algorithm calculations, obtained in steps 1-2 above:

$$\text{total\_cost} = \text{cost\_while\_anchoring} + \text{wasted\_space\_before\_reservation} +$$
$$\text{wasted\_space\_after\_reservation}$$

Optionally, the invention may also utilize "matching rules" to determine whether a particular vessel may be matched with a particular docking berth. The matching rules include business rules to increase profitability of the port, logistic rules related to the physical layout of the berth or port, rules related to the specifics of the arriving vessel, Matching rules pertain both to the initial match made, and to the "check swap match" function.

Non-limiting examples of rules may be: "first perform matching of vessel size and arrival dates with available berths", "set minimal size discrepancy between vessel and berth", "maximum size discrepancy between vessel and berth", "maximize match of berth days", "never leave large berth unoccupied", "book VIP client within 24 hours", "maximize occupancy of all berths", "maximal size of vessel allowed to transit", "minimal spacing between vessels".

The matching rules are configurable, to suit the best business practices and local marine legislation of each port.

Matching rules are weighted, to assign the relative impact of each rule, on the matching decision-making process. The invention allows adjustment of the weight for each rule, to best suit individual ports business practices.

In one example of weighting of matching rules, a port manager wishes to minimize the number of days a berth is unoccupied, therefore a penalty parameter for "unoccupied days" is set at a high value.

In another example, if the port wishes to prioritize maximal fit of vessel to berth, then the vessel dimensions are given more weight during the search for an appropriate berth match, and during the "swap match" run.

Typically, the software of the invention will assign berth matches in a "first in first out" manner, namely the first vessel to inquire about a reservation will receive the earliest handling and response.

However, a port authority may have preferences for prioritizing matches of specific inquiring vessels, such as: preference for a vessel interested in a longer stay; preference for a larger vessel due to higher revenue, preference to a predefined VIP client, etc. The software of the invention takes these port preferences into account before outputting a suggested berth match to users.

Referring back to Fig. 2, upper left branch, if a new berth 20 is added to the database, such as when a privately owned berth is offered for sublet, a search for a match 40 is made. If only an imperfect match is found ("no match"), such as arrival dates not completely matching the requested dates, the free berth still exists 100 in the database.

Addition of a new berth triggers a swap check 110, to detect if previously made matches should be changed to swap and utilize the new berth in an alternative match which is optimal for the port. If no alternative matches are found, the new free berth is added 120 to the database and its status is listed as "available".

If alternative matches are found 130, they are saved in the database. Any remaining free berths are added to the database.

The inquiring vessel owner is not typically made aware of the "check match swap" function, as his reservation was guaranteed and booked, even if it might have been carried out at the low profit margin (e.g., small vessel berthed in a large berth, priced at small vessel cost). This aspect of the invention ensures customer satisfaction, as the vessel owner typically receives a rapid positive response, and yet the "check swap match" function maintains high profitability for the port owner, by using the latest berth availability data, latest vessel data, and rechecking the size match and the profitability of all matches made.

If only an imperfect match is found ("no match") the reservation request will be placed 140 in a waiting list 30 for a predefined period. The booking user will be sent a waitlist notification, along with an estimated timeframe when to expect a final reply. The software will return the incompletely matched berth (free berth) 100 to the supply berth pool, and following elapse of the timeframe, a "berth swap check" 110 will be made to determine if additional berths have become available for any of the waitlisted reservations 30. Unmatched berths are returned to the "free berth pool" 120, and new matches 130 made are saved in the updated database, following receipt of down-payment.

Alternatively, if the match is imperfect, a query may be sent to the booking user, asking whether he accepts the partial match, for instance, he may have the flexibility to alter his arrival dates.

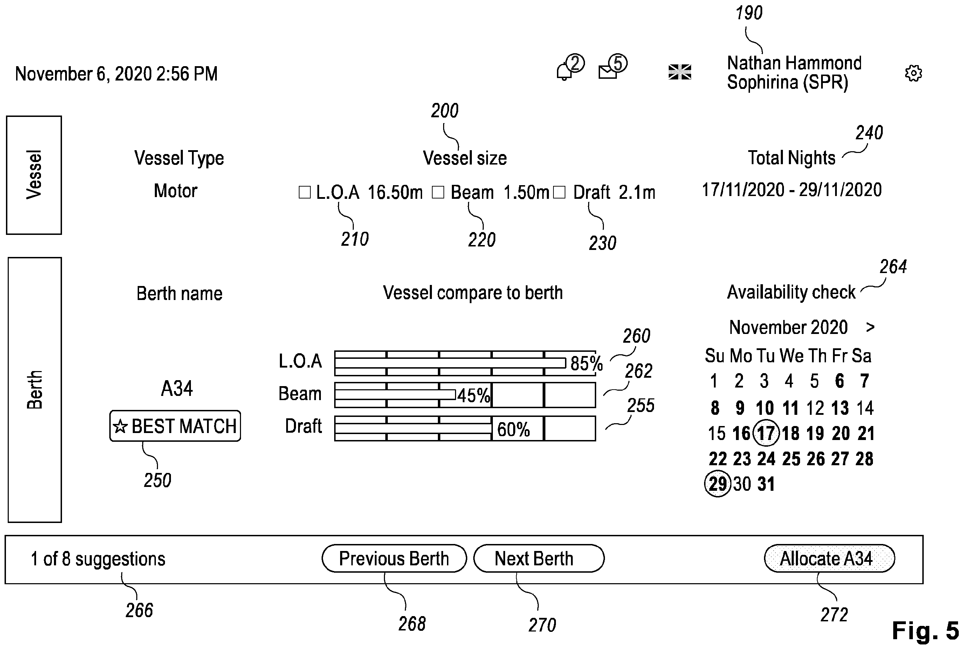

Referring now to Fig. 5, a screenshot is shown, illustrating the docking requirements of a specific vessel inquiring into booking a berth at a specific port. End-user identity 190 indicates Skipper Nathan Hammond, sailing the vessel Sophirina, has provided the port manager with docking requirements, which include the vessel size 200. Vessel size 200 is made of the vessel length overall (LOA) 210, the beam 220 (vessel width), the draft 230 (indicating the depth of the vessel).

The requested dates 240 of berth occupancy are indicated.

The "search for a match" function of the invention has identified the Best Match 250 for this vessel is Berth A34, and the match percentage 255 have been assessed as being 85% for the Length (LOA) 260.

Even though the beam match percentage 262 is assessed at only a 45% match, the match rules in this particular port have been set to give greater weight to the length LOA match than the beam match.

The availability 264 of the Best Matched Berth A34 is shown upon a calendar for the appropriate range of dates requested.

In addition to the Best Matched 250 Berth A34, the "search for a match" function of the invention has detected a total of 8 Suggested matches 266, allowing the port manager to click on Previous Berth 268 or Next Berth 270 buttons, to view next additional match options. Once a match is selected, the "Allocate Berth" 272 button may be pressed, in order to advance to checkout, payment, notification of relevant users, and to save the berth match in the database as "Booked".

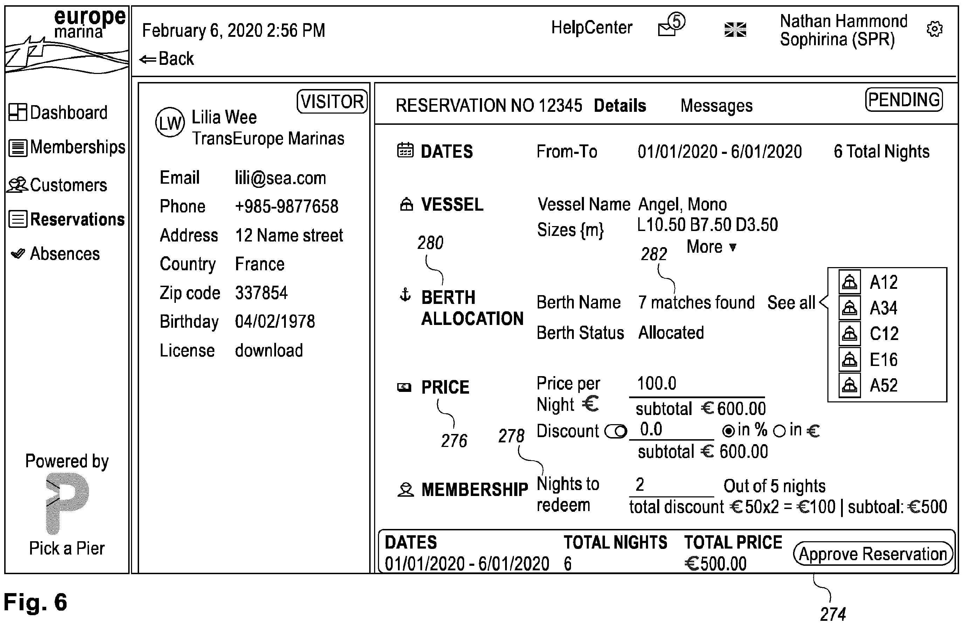

Referring to Fig. 6, a checkout screen is shown for the pending reservation previously described in relation to Fig. 5. After reviewing the details of pricing 276, such as the discount given to club members as Nights to Redeem 278, the port manager may click on the Approve Reservation 274 button, to book the reservation.

While the screen initially shows the Berth Allocation 280 as the Best Matched Berth 250, the port manager may click on the "See All 7 Matches Found" button 282 to see details of additional possible matches A12, A34, C12, E16, A52.

The port manager may then choose to change the allocation of the berth from the Best Matched Berth 250 to another of the possible matches.

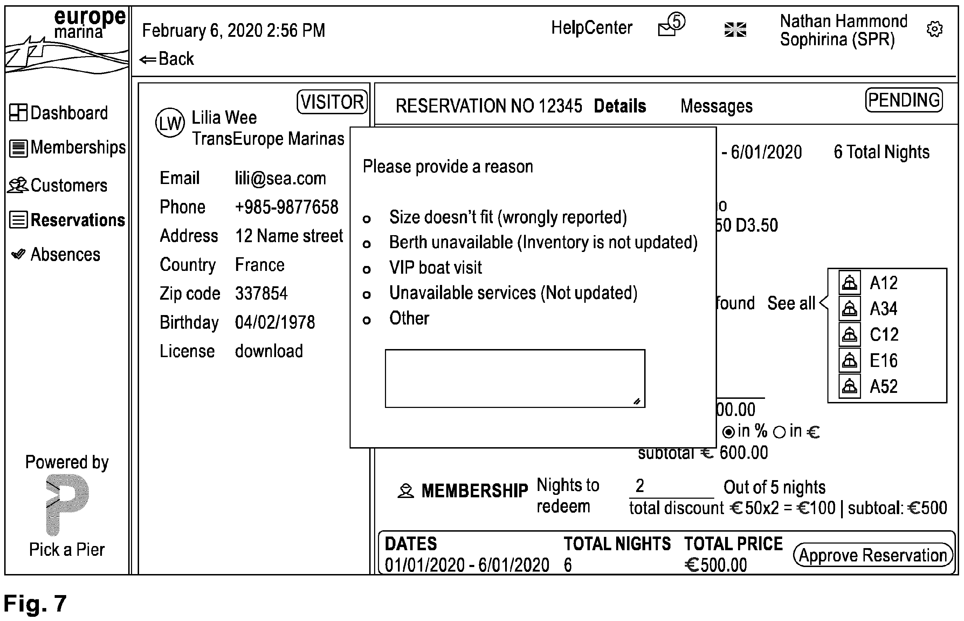

Referring to Fig. 7, a popup screen will then appear for the port manager to fill out, indicating the reason the port manager selected a new berth allocation (alternative berth selected over the Best Matched Berth).

Examples shown in Fig. 7 include: Size does not fit, VIP boat visit, Other.

This reporting information is utilized as input for future matches, so that best matches will be made in future, accordingly, preferably using a machine learning algorithm. For example, if the marina's manager reported a VIP boat visit, the algorithm will learn that this specific boat or type of boat needs to be allocated to a special berth. This situation adds two records to the database - one negative match (the changed match along with the reasoning for the change) and the new match that the port manager created.

Another example of "size doesn't fit" could be due to changes in tides and lows, that affect the depth in the marina. The machine learning algorithm will learn that on this specific day, the typical depth in the marina is incorrect, and a boat with such a depth should not be allocated this berth.

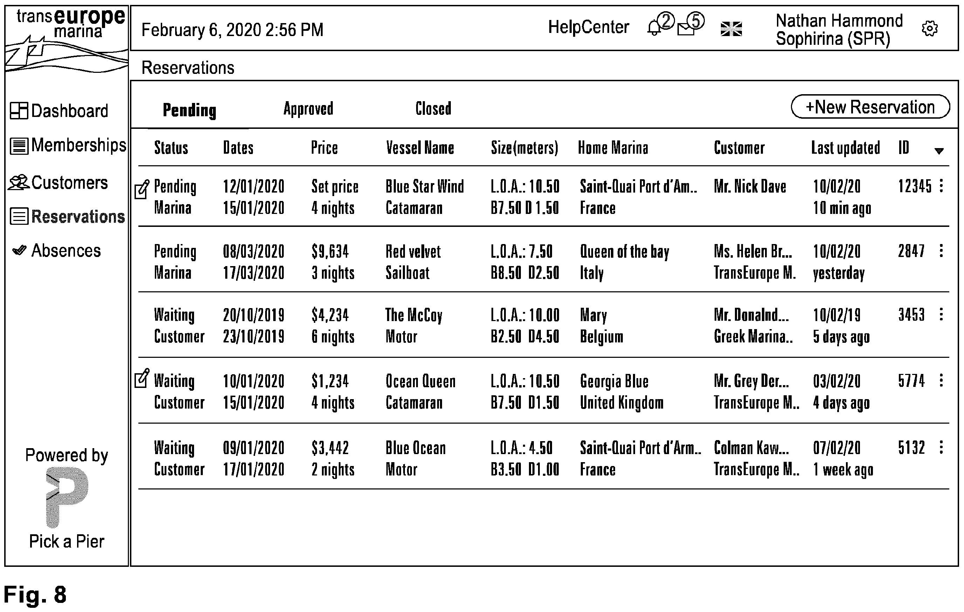

Referring to Fig. 8, a port manager reservation master screen is shown, illustrating various reservations pending and booked, at a specific port. Each entry includes details of each reservation, such as the status (pending/waiting), dates, price, vessel name, size, home marina, customer, last date updated, and reservation ID (serial no.).

Clicking on a specific entry will open the entry to drill down and display more details for the entry.

A skipper (or sea captain) may command more than one vessel, similarly a single vessel may have more than one skipper at different times. Therefore, users are defined both by the vessel and by the skipper, and suggested matches take both of these defined identities into account. Users may also be defined as cruise or charter organizations (having a central billing identity, with many vessels and many skippers).

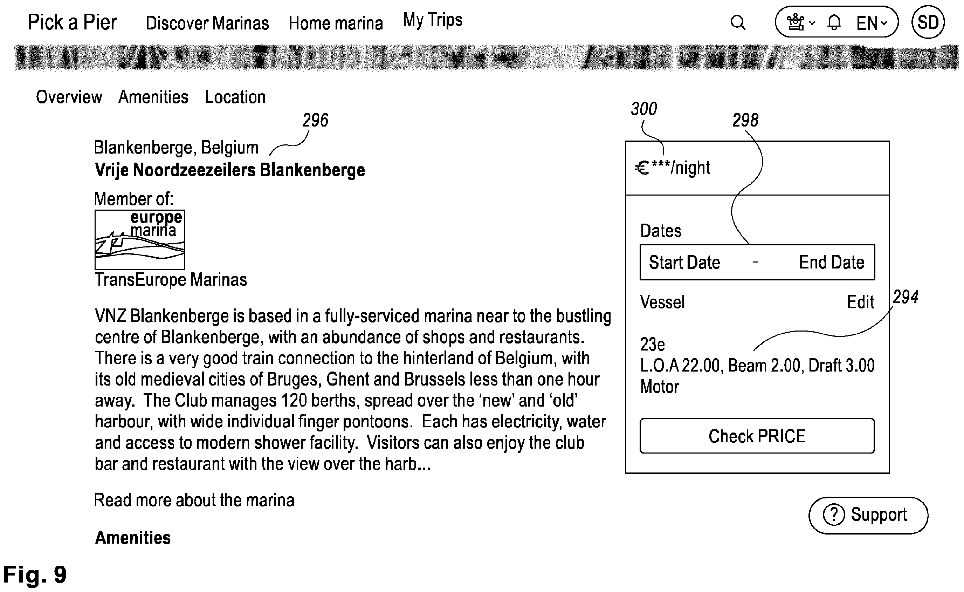

Referring to Fig. 9, owners of private berths may report their berths as being empty and available for leasing, by sending an electronic "absence report". This increases the berth supply in busy ports, a feature previously unknown in the art. As an incentive, berth owners may be paid a percentage of the berth profit or may be offered a similar berth in another participating port. In Fig. 9, Vessel 23e 294, having a LOA of 22, beam 2 and draft 3, is reporting an upcoming absence from Port Vrije Noordzeezeilers 296. Dates of absence 298 are reported, and the owner may be compensated 300 accordingly.

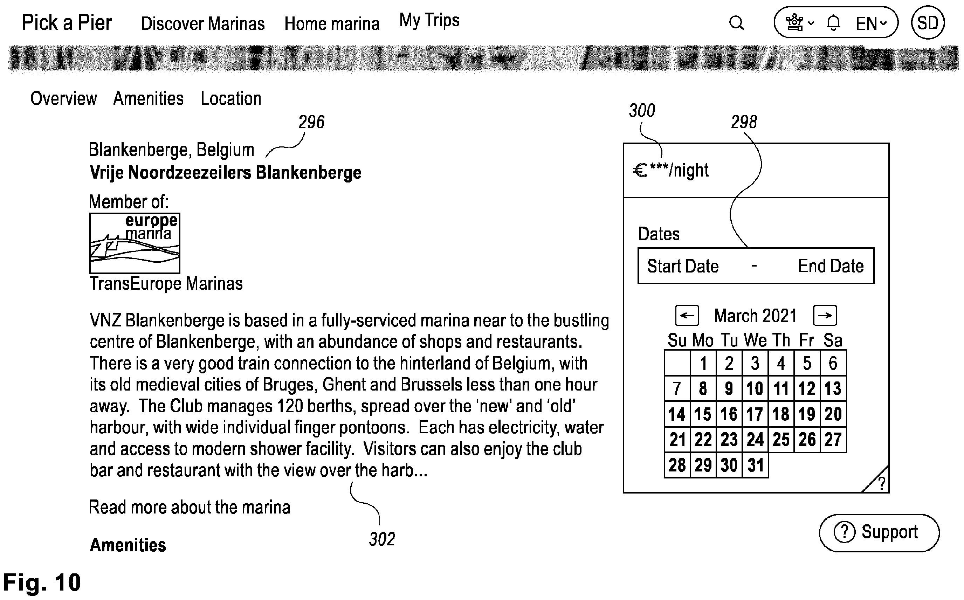

Referring to Fig. 10, a screenshot is shown, in which a vessel owner may input and send an inquiry for a reservation in the port Vrije Noordzeezeilers 296. When the user inserts the dates of interest 298, the cost per night 300 will be provided. A general description 302 of the port and optionally nearby attractions is shown, including amenities, and a user may proceed to sending his inquiry by clicking on a "book" button (not shown).

Optionally, the software will utilize user preferences and/or vessel requirements from past user visits made using the software of the invention and will suggest similar user preferences or vessel requirements.

## EXAMPLES

### Example 1:

A resident in marina "A" sent an absence report on March 15, indicating that his boat "Magic" (Length 11.8m, Beam 3.5m) will be absent from its berth 'B34' between April 1 through April 30.

A boater with a boat named "YOLO" (Length 11.5m, Beam 3.2m) requests on March 20 to reserve a berth in marina "A" for the April 1 through April 10. The algorithm will allocate boat "YOLO" the berth 'B34'.

### Example 2:

A first resident in marina "A" provides an absence report dated 15.3, indicating his boat "Magic" (Length 11.8m, Beam 3.5m) will be out of his berth 'B34' for the entire month of April.

A boater with a boat named "YOLO" (Length 11.5m, Beam 3.2m) sends a request on March 23 to reserve a berth in marina "A" for April 1-10. The algorithm will initially allocate boat "YOLO" to berth 'B34'. However, a second resident in marina "A" fills an absence report in the 25.3 that his boat "Sunrise" (Length 11.5m, Beam 3.3m) will be out of his berth 'C18' for April 1-10. The swap functionality of the algorithm will recognize that by rematching "Yolo" with 'C18' instead of 'B34' will leave less unoccupied dates, therefore a swap is made.

Another embodiment of the present invention is a computerized system for executing the method of the invention.

The computerized system includes a processing unit, a storage unit, an input interface, and an output interface. In this embodiment, these components are part of a personal computer, and they form a computing module. The components instead may be part of a workstation, PDA, or smart phone as non-limiting alternative example embodiments. As a further alternative, a computing module may be part of a machine used on the production floor.

The input interface of the computerized system is configured to receive as input at least: a request for a reservation, comprising docking requirement specifics for a vessel, comprising: a port of interest, dates of interest, and vessel size. The input interface may for example include a USB socket of the personal computer. The input interface may alternatively receive input from an entry device, such as a keyboard, and/or adjacent computer systems. The computerized system includes an input module that is configured to transmit to the input interface a user's input.

The software is layered, allowing its integration with existing user software applications. Users that already utilize existing applications for tracking and booking marine reservations, or billing and accounting software, may nevertheless utilize vital components such as the rule engines, matching functions, reports, etc.

The software is preferably run on "cloud-based" protected servers which allow authorized users to access it from any location having communications capability. This is useful in the travel industry, as users may be situated at a multitude of locations. A manager may wish to track progress at any of these locations and may have access to the availability of berths further down the travel route of a vessel. The software may be provided to authorized users, as a software as a service (SaaS), which may be suitable for instance for small ports.

Users may access and utilize the software of the invention via a user interface, using a web browser, or using a dedicated software application configured for a user smart cell phone, tablet or PDA, or personal computer.

The processing unit is operatively connected to the input interface, the output interface, and the storage unit. The processing unit executes instructions contained in the storage unit. The instructions, when executed, cause the processing unit to: receive as input, a request for a reservation, comprising docking requirement specifics for a vessel, comprising: a port of interest, dates of interest, and vessel size;

- maintain in memory a database comprising berth data specifics of a plurality of berths located at a port; the berth data specifics comprise: the availability status of each of the berths, and the physical characteristics of each of the berths;
- search a database to identify an initial match between said request for a reservation, and between said berth data specifics of available berths of said database; wherein said match meets a predetermined threshold;
- if an initial match is identified, save said initial match in said database;
- optimize at least said initial match using an optimizer function, to
- detect whether an alternative match is more optimal according to predetermined port
- business preferences;
- if an alternative optimal match is identified, swap said initial match with said alternative match and save said alternative match in said database; and output said alternative match to a user as a reservation for booking;
- if no alternative optimal match is identified, output said initial match to a user as a reservation for booking.

As non-limiting examples, the processing unit of system may include an Intel Processor Core i7, an Intel Model 1165G7 CPU, or any other equivalent means for processing (executing) instructions contained in the storage unit. Also, as non-limiting examples, the storage unit may be SATA hard drive, a flash memory SSD, or any other equivalent means for storing instructions that when executed by the processing unit cause the processing unit to function as described above.

The embodiment may be modified to allow a user to interact with a computing module through a network. As non-limiting examples, the network may be a local area network (LAN) within an office environment or alternatively the Internet. An alternative embodiment may implement a "hosted" architecture for the computing module, whereby the algorithmic calculations are done in a remote data-centre (server farm) accessible over the network/Internet. Another alternative embodiment may implement a cloud computing configuration for the computing module. Thus, a user may interact with the computing module using a Microsoft® Windows-based utility or a web browser, as non-limiting examples.

Having described the invention with regard to certain specific embodiments thereof, it is to be understood that the description is not meant as a limitation, as further modifications will now become apparent to those skilled in the art, and it is intended to cover such modifications as are within the scope of the appended claims.

## Claims

1. A computerized method for tracking and matching reservations, of marine docking berths at ports, said method comprising:

   a) receiving as input, a request for a reservation, comprising docking requirement specifics for a vessel, comprising: a port of interest, dates of interest, and vessel size;
   b) maintaining in memory a database comprising berth data specifics of a plurality of berths located at a port; wherein said berth data specifics comprise: the availability status of said each of said berths, and the physical characteristics of each of said berths;
   c) searching said database to identify an initial match between said request for a reservation, and between said berth data specifics of available berths of said database; wherein said match meets a predetermined threshold;
   d) if an initial match is identified, saving said initial match in said database;
   e) optimizing at least said initial match using an optimizer function, to detect whether an alternative match is more optimal according to predetermined port business preferences;
   f) if an alternative optimal match is identified, swapping said initial match with said alternative match and saving said alternative match in said database; and outputting said alternative match to a user as a reservation for booking;
   g) if no alternative optimal match is identified, outputting said initial match to a user as a reservation for booking.

2. The method of claim 1, wherein said optimizer function of step e) comprises a space matching estimation, which is calculated and effected by the following: the duration of the stay requested in the reservation, the price for the berth, and a prestige factor of the vessel.

3. The method of claim 1, wherein said optimizer function of step e) comprises a date matching estimation, which is calculated and effected by the following: the size of the vessel; and the number of days the berth is left unoccupied.

4. The method of claim 3, wherein in said calculation of said number of days the berth is left unoccupied, a penalty is calculated for days unoccupied at the start of a reservation.

5. The method of claim 1, wherein said optimizer function of step e) comprises a total cost estimation, calculated and effected by: the size of the vessel; the price; the space difference for the reservation; the wasted space before the start date of the reservation and the wasted space after the reservation end date.

6. The method of claim 1, wherein said optimizer function is triggered to perform said steps e)-g) to calculate and identify alternative matches for all matches made for vessels, when at least one of the following occurs: a new reservation is made; the availability status of a berth is changed in said database; a new berth is added or moved from the database and a booked reservation is changed.

7. The method of claim 1, wherein said step e) optimizing, comprises:

   a) maintaining in memory predetermined port business preferences;
   b) assigning relative weights of importance to said input parameters and to said predetermined port business preferences;
   c) computing, based on said predetermined port business preferences, on said input parameters, and on said relative weights of importance, a ranking of the optimality of at least one match;
   d) selecting and outputting one or more highest ranked optimal matches.

8. The method of claim 7, wherein said predetermined port business preferences comprise at least one of the following: maximize occupancy of all berths; prefer matches having no unoccupied dates at the start date of the reservation; handle reservation requests in the order of their receipt; maximize profit; set the value of minimal size discrepancy between vessel and berth, set value of maximum size discrepancy between vessel and berth, maximize match of berth days, never leave large berth unoccupied, book VIP reservation within 24 hours, maximal size of vessel allowed in port, minimal spacing between vessels; prioritize matches for requests having a lengthy stay; prioritize matches for larger vessels, prioritize matches for predefined VIP requests.

9. The method of claim 7, wherein the following parameters are configurable according to a port preference: said predetermined port business preferences; and the value of each of said relative weights of importance.

10. The method of claim 1, wherein said berth data specifics comprise at least one of the following physical characteristics of a berth: the estimated water depth, the minimal docking length; the pier identity, the pier location; the berth identity, and the berth location.

11. The method of claim 1, wherein upon receipt of an absence report pertaining to a departing vessel, and communicated by a user associated with a specific berth, said database is populated in said step b) to include berth specifics of said specific berth.

12. The method of claim 1, wherein in step d), if no initial match is identified, said request for a reservation is saved in memory in a waiting list; and said step c) of searching for a match is repeated after a predetermined interval.

13. The method of claim 1, comprising outputting to the user requesting a reservation, a "reservation approved" notification, after an initial match is made, between steps d) and e), for rapid response time.

14. The method of claim 1, wherein said step e) of optimizing comprises utilizing a machine learning function which identifies patterns of behaviour over time, that: effect port business preferences of a port; or effect matches made; and said machine learning function utilizes said patterns as input for future optimizations performed.

15. A computerized system for tracking and matching reservations, of marine docking berths at ports; said system comprising: an input interface configured to receive input parameters comprising a request for a reservation, comprising docking requirement specifics for a vessel, comprised of: a port of interest, dates of interest, and vessel size; and said input interface configured to receive port business preferences;
a processing unit operatively connected to the input interface;
a storage unit operatively connected to the processing unit to store the input parameters; the storage unit also containing instructions that when executed by the processing unit cause the processing unit to:

a) receive as input, a request for a reservation, comprising docking requirement specifics for a vessel, comprising: a port of interest, dates of interest, and vessel size;

b) maintain in memory a database comprising berth data specifics of a plurality of berths located at a port; wherein said berth data specifics comprise: the availability status of said each of said berths, and the physical characteristics of each of said berths;

c) search said database to identify an initial match between said request for a reservation, and between said berth data specifics of available berths of said database; wherein said match meets a predetermined threshold;

d) if an initial match is identified, save said initial match in said database;

e) optimize at least said initial match using an optimizer function, to detect whether an alternative match is more optimal according to predetermined port business preferences;

f) if an alternative optimal match is identified, swap said initial match with said alternative match and save said alternative match in said database; and output said alternative match to a user as a reservation for booking;

g) if no alternative optimal match is identified, output said initial match to a user as a reservation for booking.

Matches

| |
|---|
| Reservation - Berth |
| Reservation - Berth |
| . |
| Reservation - Berth |

Available berths

Reservation
Reservation
Reservation

| |
|---|
| Berth |
| Berth |
| : |
| Berth |

Search
for a
match

Match found

Not found

No available
berths

**Fig. 1   Prior Art**

Fig. 2

**Matches Pool**
Match A
Reservation 1
5/5 - 15/5

Berth 1
Availability
10/5 - 30/5

*150*

⬆⬆
*292* Match swap

⬇⬇

Available berth · Match B
Reservation 2
10/5 - 30/5

Reservation 2
10/5 x 30/5

→ Berth 2
Availability
5/5 - 30/5

→ Berth 2
Availability
5/5 - 30/5

*288*

Reservation 2
10/5 - 30/5
*286*
Berth 1
Availability
10/5 - 30/5

Swap matches A with B

Reservation 1
5/5 - 15/5
*290*
Berth 2
Availability
5/5 - 30/5

# Fig. 3

**Matches Pool**
Match A ⟋ *150*
Reservation 1
10 x 3 (m)

Berth 1
11 x 3.5 (m)

↑↑
Match swap
↓↓

Reservation 2
11 x 3.5 (m)

*170*

Berth 1
11 x 3.5 (m)

Available
berth

Match B

Reservation 2
11 x 3.5 (m)

Reservation 2
11 x 3.5 (m)

→

→

Swap
matches
A with B

Berth 2
12 x 4 (m)

Berth 2
12 x 4 (m)

Reservation 1
10 x 3 (m)

*160*

Berth 2
12 x 4 (m)

# Fig. 4

November 6, 2020 2:56 PM

⌕② ✉⑤ 🇬🇧 Nathan Hammond *190*
Sophirina (SPR) ⚙

**Vessel**

Vessel Type

Motor

Vessel size *200*

☐ L.O.A 16.50m ☐ Beam 1.50m ☐ Draft 2.1m

*210* *220* *230*

Total Nights *240*

17/11/2020 - 29/11/2020

**Berth**

Berth name

A34

☆ BEST MATCH

*250*

Vessel compare to berth

*260*
L.O.A ▭▭▭▭▭85% *262*
Beam ▭▭45% ▭
Draft ▭▭60% ▭ *255*

Availability check *264*

November 2020 >

| Su | Mo | Tu | We | Th | Fr | Sa |
|----|----|----|----|----|----|----|
| 1 | 2 | 3 | 4 | 5 | **6** | **7** |
| **8** | **9** | **10** | **11** | 12 | **13** | 14 |
| 15 | **16** | (**17**) | **18** | **19** | **20** | **21** |
| **22** | **23** | **24** | **25** | **26** | **27** | **28** |
| (**29**) | 30 | **31** | | | | |

1 of 8 suggestions

( Previous Berth ) ( Next Berth )

( Allocate A34 )

*266*

*268* *270*

*272*

**Fig. 5**

EP 3 896 628 A1

**europe** marina

⊞ Dashboard

▤ Memberships

🏫 Customers

▤ **Reservations**

✔ Absences

Powered by

**P**

Pick a Pier

---

(LW) Lilia Wee  (VISITOR)
TransEurope Marinas

| Email | lili@sea.com |
| Phone | +985-9877658 |
| Address | 12 Name street |
| Country | France |
| Zip code | 337854 |
| Birthday | 04/02/1978 |
| License | download |

---

RESERVATION NO 12345  **Details**  Messages  (PENDING)

📅 **DATES**  From-To  01/01/2020 - 6/01/2020  6 Total Nights

⚓ **VESSEL**  Vessel Name  Angel, Mono
_280_  Sizes {m}  L10.50 B7.50 D3.50
_282_  More ▾

⚓ **BERTH ALLOCATION**  Berth Name  7 matches found  See all ⟨
Berth Status  Allocated

| ⚓ A12 |
| ⚓ A34 |
| ⚓ C12 |
| ⚓ E16 |
| ⚓ A52 |

💶 **PRICE**  Price per Night €  100.0
_276_  _278_  subtotal  € 600.00
Discount ⊙  0.0  ◉ in % ○ in €
subtotal  € 600.00

🧑 **MEMBERSHIP**  Nights to redeem  2  Out of 5 nights
total discount € 50x2 = €100 | subtoal: €500

| DATES | TOTAL NIGHTS | TOTAL PRICE | |
| 01/01/2020 - 6/01/2020 | 6 | €500.00 | (Approve Reservation) |

_274_

**Fig. 6**

EP 3 896 628 A1

europe marina

February 6, 2020 2:56 PM                    HelpCenter    ✉⑤   🇬🇧   Nathan Hammond
                                                                    Sophirina (SPR)   ⚙
← Back

- ⊞ Dashboard
- ▤ Memberships
- ⚌ Customers
- ▤ **Reservations**
- ✔ Absences

Powered by

**P**

Pick a Pier

(LW) Lilia Wee   (VISITOR)
      TransEurope Marinas

Email     lili@sea.com
Phone     +985-9877658
Address   12 Name street
Country   France
Zip code  337854
Birthday  04/02/1978
License   download

RESERVATION NO 12345  **Details**   Messages        (PENDING)

Please provide a reason

- ○  Size doesn't fit (wrongly reported)
- ○  Berth unavailable (Inventory is not updated)
- ○  VIP boat visit
- ○  Unavailable services (Not updated)
- ○  Other

- 6/01/2020       6 Total Nights

...0 D3.50

found   See all ⟨  | 🛥 A12 |
                    | 🛥 A34 |
                    | 🛥 C12 |
                    | 🛥 E16 |
                    | 🛥 A52 |

...00.00
◉ in %  ○ in €
subtotal € 600.00

⚌ **MEMBERSHIP**  Nights to redeem    2    Out of 5 nights
                                      total discount € 50x2 = €100 | subtoal: €500

| **DATES** | **TOTAL NIGHTS** | **TOTAL PRICE** | |
|---|---|---|---|
| 01/01/2020 - 6/01/2020 | 6 | €500.00 | (Approve Reservation) |

**Fig. 7**

EP 3 896 628 A1

trans**europe**
marina

February 6, 2020 2:56 PM                    HelpCenter  🔔②✉⑤  🇬🇧  Nathan Hammond  ⚙
                                                                         Sophirina (SPR)

Reservations

⊞ Dashboard

≣ Memberships

| **Pending** | Approved | Closed | | | | | | +New Reservation |
|---|---|---|---|---|---|---|---|---|

≣ Customers

≣ Reservations

✔ Absences

| | Status | Dates | Price | Vessel Name | Size(meters) | Home Marina | Customer | Last updated | ID | ▾ |
|---|---|---|---|---|---|---|---|---|---|---|
| 📝 | Pending Marina | 12/01/2020 15/01/2020 | Set price 4 nights | Blue Star Wind Catamaran | L.O.A.: 10.50 B7.50 D 1.50 | Saint-Quai Port d'Am.. France | Mr. Nick Dave | 10/02/20 10 min ago | 12345 | ⋮ |
| | Pending Marina | 08/03/2020 17/03/2020 | $9,634 3 nights | Red velvet Sailboat | L.O.A.: 7.50 B8.50 D2.50 | Queen of the bay Italy | Ms. Helen Br... TransEurope M. | 10/02/20 yesterday | 2847 | ⋮ |
| | Waiting Customer | 20/10/2019 23/10/2019 | $4,234 6 nights | The McCoy Motor | L.O.A.: 10.00 B2.50 D4.50 | Mary Belgium | Mr. Donalnd... Greek Marina.. | 10/02/19 5 days ago | 3453 | ⋮ |
| 📝 | Waiting Customer | 10/01/2020 15/01/2020 | $1,234 4 nights | Ocean Queen Catamaran | L.O.A.: 10.50 B7.50 D1.50 | Georgia Blue United Kingdom | Mr. Grey Der... TransEurope M.. | 03/02/20 4 days ago | 5774 | ⋮ |
| | Waiting Customer | 09/01/2020 17/01/2020 | $3,442 2 nights | Blue Ocean Motor | L.O.A.: 4.50 B3.50 D1.00 | Saint-Quai Port d'Arm.. France | Colman Kaw... TransEurope M.. | 07/02/20 1 week ago | 5132 | ⋮ |

Powered by

P

Pick a Pier

**Fig. 8**

Overview   Amenities   Location

*296*

Blankenberge, Belgium
**Vrije Noordzeezeilers Blankenberge**

Member of:

europe
marina

TransEurope Marinas

VNZ Blankenberge is based in a fully-serviced marina near to the bustling centre of Blankenberge, with an abundance of shops and restaurants. There is a very good train connection to the hinterland of Belgium, with its old medieval cities of Bruges, Ghent and Brussels less than one hour away. The Club manages 120 berths, spread over the 'new' and 'old' harbour, with wide individual finger pontoons. Each has electricity, water and access to modern shower facility. Visitors can also enjoy the club bar and restaurant with the view over the harb...

Read more about the marina

**Amenities**

*300*          *298*

€ ***/night

Dates

| Start Date    -    End Date |

Vessel                          Edit   *294*

23e
L.O.A 22.00, Beam 2.00, Draft 3.00
Motor

Check PRICE

? Support

# Fig. 9

EP 3 896 628 A1

Pick a Pier    Discover Marinas    Home marina    My Trips    Q    ⚙∨  🔔  EN∨    (SD)

Overview    Amenities    Location

*300*    *298*

Blankenberge, Belgium    *296*
**Vrije Noordzeezeilers Blankenberge**

Member of:

**europe marina**

TransEurope Marinas

VNZ Blankenberge is based in a fully-serviced marina near to the bustling centre of Blankenberge, with an abundance of shops and restaurants. There is a very good train connection to the hinterland of Belgium, with its old medieval cities of Bruges, Ghent and Brussels less than one hour away. The Club manages 120 berths, spread over the 'new' and 'old' harbour, with wide individual finger pontoons. Each has electricity, water and access to modern shower facility. Visitors can also enjoy the club bar and restaurant with the view over the harb...

Read more about the marina

**Amenities**    *302*

€***/night

Dates

| Start Date | - | End Date |

←  March 2021  →

| Su | Mo | Tu | We | Th | Fr | Sa |
|----|----|----|----|----|----|----|
|    | 1  | 2  | 3  | 4  | 5  | 6  |
| 7  | 8  | 9  | 10 | 11 | 12 | 13 |
| 14 | 15 | 16 | 17 | 18 | 19 | 20 |
| 21 | 22 | 23 | 24 | 25 | 26 | 27 |
| 28 | 29 | 30 | 31 |    |    |    |

?

(?) Support

**Fig. 10**

Europäisches
Patentamt

European
Patent Office

Office européen
des brevets

# EUROPEAN SEARCH REPORT

Application Number

EP 21 16 8355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 489 195 A (247SEAS LTD [GB]) 26 September 2012 (2012-09-26) * page 27 - page 29; claims 3,6,7 * ----- | 1-15 | INV. G06Q10/06 G06Q50/30 |

TECHNICAL FIELDS
SEARCHED      (IPC)

G06Q

The present search report has been drawn up for all claims

| Place of search | Date of completion of the search | Examiner |
|---|---|---|
| Munich | 2 September 2021 | Liendl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................................

& : member of the same patent family, corresponding
document

EPO FORM 1503 03.82 (P04C01)

**EP 3 896 628 A1**

## ANNEX TO THE EUROPEAN SEARCH REPORT
## ON EUROPEAN PATENT APPLICATION NO.

EP 21 16 8355

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2021

| Patent document cited in search report | | Publication date | Patent family member(s) | Publication date |
|---|---|---|---|---|
| GB 2489195 | A | 26-09-2012 | NONE | |

EPO FORM P0459

For more details about this annex : see Official Journal of the European Patent Office, No. 12/82